# EUROPÄISCHE PATENTSCHRIFT

(11) **EP 1 738 889 B1**
(45) Veröffentlichungstag und Bekanntmachung des Hinweises auf die Patenterteilung: **30.06.2010**
(21) Anmeldenummer: 06013197.6
(22) Anmeldetag: 27.06.2006
(51) Int. Cl.: B29C 45/14, B29C 45/16, B28B 7/32, B29C 44/58, A43B 13/18

(54) **Verfahren zur Bildung von Funktionshohlräumen in Kunststoffen**
Process for forming functional hollow portions in plastic
Procédé pour former des parties fonctionelles creuses dans des matériaux plastiques

(43) Veröffentlichungstag der Anmeldung: 03.01.2007
(73) Patentinhaber: Mankau, Dieter, 60316 Frankfurt am Main (DE)
(72) Erfinder: Mankau, Dieter, 60316 Frankfurt am Main (DE)
(74) Vertreter: Jochem, Bernd

(56) Entgegenhaltungen:
- EP-A2- 1 205 131
- EP-A2- 1 214 897
- WO-A-00/47381
- US-A- 5 286 184
- US-A- 5 858 295
- US-A1- 2002 172 817

## Beschreibung

Die Erfindung betrifft ein Verfahren zur Bildung von Funktionshohlräumen in Produkten, die aus spritz- oder gießfähigen Kunststoffen hergestellt werden, insbesondere in Schuhsohlen, Sitzelementen und Verkleidungsteilen aus geschäumten Materialien.

Es ist bekannt, dass bei giessfähigen Werkstoffen wie Kunststoffgiessmassen mittels einfacher Vorrichtungen, wie z. B. aus Holzplatten gefertigter Hohlkerne, Hohlräume im Material realisiert werden können. Für zylindrische Durchbrüche werden oft Kunststoffhohlrohre mit in das Material eingegossen oder es werden speziell dafür angefertigte Kerne verwendet, die nach dem Erhärten des Materials wieder aus der Form herausgezogen werden. Oft werden, um Gewicht zu sparen, Styroporkerne verwendet, die als verlorene Form im Material verbleiben. Bei GfK- Formteilen werden Schaumkerne als Einlegeteile verwendet, die mit einlaminiert werden, um dadurch eine größere Verwindungssteifigkeit der Teile zu erreichen. Funktionshohlräume in der Kunststoffschuhsohle, die für unterschiedliche Dämpfungsaufgaben oder für das Klima im Laufschuh eingebracht sind, werden in der Regel mit technisch aufwendigen Formwerkzeugen realisiert. In Kunststoffsohlen eingebrachte pneumatische Dämpfungselemente werden entweder mit einer zweigeteilten Spritzgußform oder mit einem Spritzgußwerkzeug und entsprechenden Schiebern im Werkzeug realisiert.

Es ist weiterhin aus der EP 1 205 131 A2 bekannt, Hohlkörper mit einer geschäumten oder aus Folie bestehenden Außenwand bei der Herstellung eines Schaumstoffelements, z. B. einer Matratze, zu umschäumen. Die EP 1 214 897 A2 beschreibt gasdichte Kissen, die u. a. in Schuhsohlen aus Kunststoff eingegossen werden. Aus der US-A-5286184 ist es bekannt, durch Spritzgießen mittels zweier konzentrischer Düsen, von denen die innere aus der äußeren herausragt, ein sandwichartig aus drei festen Kunststoffschichten bestehendes Produkt ohne Hohlräume zu erzeugen.

Der Erfindung liegt die Aufgabe zugrunde, einzelne Funktionshohlräume in Produkten aus Kunststoff auf einfachere Weise als bisher zu erzeugen, und diese Aufgabe wird, wenn eine Außenhaut gebraucht wird, erfindungsgemäß dadurch gelöst, dass mit einer Injektionsnadel, die mindestens mit ihrer Nadelspitze in ein noch fließfähiges Kunststoffgrundmaterial eintaucht, zwei Fluide in getrennten Kanälen zur Spitze der Nadel transportiert werden, nämlich ein Füllstoff, wie Luft, Gas oder eine Flüssigkeit, durch eine mittig in der Injektionsnadel angeordnete Hohlnadel und ein zähflüssiger Kunststoff in einem die Hohlnadel umgebenden Ringkanal, der in einem geringen Abstand zwischen der Außenform der Hohlnadel und der Innenform der Injektionsnadel verläuft, wobei zunächst aus dem zähflüssigen Kunststoff an der Spitze der Injektionsnadel ein Tropfen gebildet wird und dann dieser Tropfen über die mit ihrer Mündung axial über die Mündung des Ringkanals vorstehende und sich in den Tropfen erstreckende Hohlnadel in dem noch fließfähigen Kunststoffgrundmaterial aufgeblasen oder mit Flüssigkeit gefüllt wird, wobei aus dem zähflüssigen Kunststoff des Tropfens eine Außenhaut für einen Funktionshohlraum gebildet wird.

Bei diesem Verfahren ist die Erzeugung eines abgeschlossenen Hohlkörpers in einem aus Kunststoff bestehenden Produkt ähnlich dem Entstehungsprozeß einer Kaugummiblase. Der im zähflüssigen Zustand aufgeblasene Ballon bildet die Außenhaut für den im Grundmaterial eingeschlossenen Hohlkörper. Das aufblasbare Material für die Außenhaut der Funktionshohlräume im Kunststoffgrundmaterial kann wahlweise aus dem Material, aus dem das Kunststoffgrundmaterial besteht, oder aus einem anderen Material gebildet werden, wie z. B. PUR, PE, Latex oder vorgeheizten, spritzgießfähigen Kunststoffmaterialien etc. mit und ohne Härterzusatz, kalt oder warm aushärtend. Bei Verwendung von Luft für das Aufblasen der Außenhaut im Grundmaterial ist es vorteilhaft, wenn die Injektionsnadeln am Boden der Gieß-, Spritz- oder Schäumform angebracht werden.

Wenn nur einfache, praktische Produktanforderungen bestehen, kann es genügen, zur Bildung eines Funktionshohlraums mittels einer Injektionsnadel nur einen einzigen Stoff in das noch fließfähige Grundmaterial des zu fertigenden Produkts zu injizieren. Dabei kann es sich um einen aufschäumbaren Kunststoff handeln, der nach der Injektion in dem Grundmaterial aufschäumt und einen Funktionshohlraum bildet, der eine Schaumstruktur enthält.

Ausführungsbeispiele der Erfindung werden nachstehend anhand der Zeichnung näher erläutert. Es zeigen:
- Fig. 1: einen Längsschnitt einer Schuhsohle mit einzelnen abgeschlossenen Funktions- hohlräumen;
- Fig. 2: einen vertikalen Schnitt durch ein GfK- Element mit zwei Hohlkammern, die mit GfK-Material ummantelt und miteinander sowie mit dem GfK-Element verbunden la- miniert sind;
- Fig. 3: eine Prinzipdarstellung, welche in ei- ner ersten Phase eine Tropfenbildung eines zähflüssigen Materials für die Außenhaut eines Hohlkörpers an der Spitze einer Injektionsnadel zeigt, die in ein Grundmaterial eingetaucht ist;
- Fig. 4: eine Fig. 3 entsprechende Darstellung, welche in einer zweiten Phase eine im Grundmaterial aufgeblasene, zähflüssige Außenhaut zeigt, die sich noch an der Spitze der Injektionsnadel befindet.

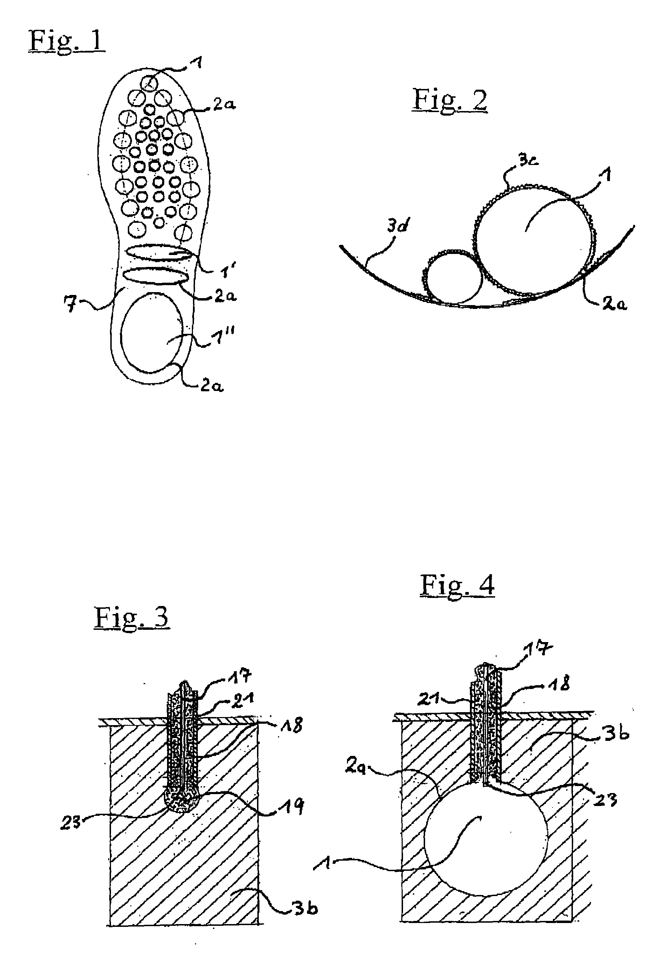

In Fig. 1 ist als Anwendungsbeispiel eine Schuhsohle 7 dargestellt, bei der zwischen der Innen- und der Laufsohle einzelne abgeschlossene Funktionshohlkörper 1, 1' und 1" in das Grundmaterial 3b eingebunden sind. Die Außenhaut der Funktionshohlkörper 1 ist mit 2a bezeichnet. Vorteilhaft bei dieser Anwendung der Funktionshohlkörper in der Schuhsohle 7 ist der damit erreichbare hohe Grad an automatisierten Produktionsabläufen.

Die Möglichkeiten unterschiedlicher Größen, Formen und Lagen der Hohlkörper 1 im Grundmaterial 3b der Schuhsohle 7 werden von den jeweiligen Produktanforderungen bestimmt.

Als weiteres Anwendungsbeispiel ist in Fig. 2 eine Möglichkeit für den Einsatz von Hohlkörpern 1 im Bereich glasfaserverstärkter Kunststoffe 3c skizzenhaft dargestellt. Hier können die Hohlkörper 1 beim Laminieren von Hand oder beim Aufspritzen der gehäckselten Glasfasern zusammen mit dem Harz Verwendung finden. So können die Funktionshohlräume 1 z. B. eingesetzt werden, um die Festigkeit der GfK-Teile deutlich zu erhöhen. Die technisch-konstruktiven Anforderungen sind bestimmend für die Form, Größe und Lage der Hohlkörper 1 und dafür, wie sie mit dem Teil 3d selbst und miteinander durch das GfK-Material verbunden werden.

In Fig. 3 und 4 ist skizzenhaft ein Injektionsverfahren mit dem Einbringen einer flüssigen Außenhaut 2a für die Bildung der Funktionshohlräume 1 im Grundmaterial dargestellt. In einer Injektionsnadel 21, die mindestens mit ihrer Nadelspitze 23 in das noch fließfähige Kunststoffgrundmaterial 3b eingetaucht ist, werden zwei Fluide in getrennten Kanälen zur Spitze der Nadel transportiert.

Der durch eine innere Hohlnadel gebildete, zentrale Kanal 17 transportiert alternativ Luft, Gas oder eine Flüssigkeit, um damit den in Fig. 1 dargestellten Tropfen 19 aus zähflüssigem Kunststoff, der durch einen den zentralen Kanal 17 umgebenden Ringkanal 18 nach vorne an die Nadelspitze 23 der Injektionsnadel 21 transportiert wurde, im Grundmaterial 3b aufzublasen, wie dies in Fig. 3 dargestellt ist. Dieser zähflüssige, aufgeblasene Ballon bildet die Außenhaut 2a für die Funktionshohlkörper 1 im Grundmaterial.

Mit einem einfachen Injektionsverfahren können auch aufschäumbare Kunststoffe in das noch fließfähige Grundmaterial 3b injiziert werden, die im Grundmaterial 3b aufschäumen und im fertigen Zustand eine Schaumstruktur enthaltende Funktionshohlräume mit bestimmten physikalischen Eigenschaften bilden.

## Patentansprüche

1. Verfahren zur Bildung von einzelnen Funktionshohlräumen in Produkten aus Kunststoff, insbesondere in Schuhsohlen, Sitzelementen und Verkleidungsteilen aus geschäumten Materialien, **dadurch gekennzeichnet, dass** mit einer Injektionsnadel (21), die mindestens mit ihrer Nadelspitze (23) in ein noch fließfähiges Kunststoffgrundmaterial (3b) eintaucht, zwei Fluide in getrennten Kanälen (17, 18) zur Spitze (23) der Nadel (21) transportiert werden, nämlich ein Füllstoff, wie Luft, Gas oder eine Flüssigkeit, durch eine mittig in der Injektionsnadel (21) angeordnete Hohlnadel (17) und ein zähflüssiger Kunststoff (2a) in einem die Hohlnadel (17) umgebenden Ringkanal (18), der in einem geringen Abstand zwischen der Außenform der Hohlnadel (17) und der Innenform der Injektionsnadel (21) verläuft, wobei zunächst aus dem zähflüssigen Kunststoff (2a) an der Spitze (23) der Injektionsnadel (21) ein Tropfen (19) gebildet wird und dann dieser Tropfen (19) über die mit ihrer Mündung (bei 23) axial über die Mündung des Ringkanals (18) vorstehende und sich in den Tropfen (19) erstreckende Hohlnadel (17) in dem noch fließfähigen Kunststoffgrundmaterial (3b) aufgeblasen oder mit Flüssigkeit gefüllt wird, wobei aus dem zähflüssigen Kunststoff (2a) des Tropfens (19) eine Außenhaut (2a) für einen Funktionshohlraum gebildet wird.

2. Verfahren nach Anspruch 1, **dadurch gekennzeichnet, dass** das Material der Außenhaut (2a) identisch mit dem Grundmaterial (3b) ist.

3. Verfahren nach Anspruch 1, **dadurch gekennzeichnet, dass** das Material der Außenhaut (2a) nicht identisch mit dem Grundmaterial (3b) ist.

4. Verfahren nach Anspruch 1, **dadurch gekennzeichnet, dass** die Außenhaut (2a) aus einem Material wie Silikon, PUR, PE, Latex oder aus vorgeheizten, thermoplastischen Kunststoffen, die mit und ohne Härter warm oder kalt aushärten, gebildet wird.

5. Verfahren zur Bildung von einzelnen Funktionshohlräumen in Produkten aus Kunststoff, **dadurch gekennzeichnet, dass** in ein noch fließfähiges Kunststoffgrundmaterial (3b) mit einer Injektionsnadel (21) ein aufschäumbarer Kunststoff injiziert wird, der im Grundmaterial (3b) aufschäumt und in sich abgeschlossene, eine Schaumstruktur enthaltende Funktionshohlräume (1) mit bestimmten physikalischen Eigenschaften bildet.

## Claims

1. A method of forming individual functional cavities in products consisting of plastics material, in particular in shoe soles, seating elements and panelling members consisting of foamed materials, **characterised in that** with an injector needle (21), which dips into a still-fluid base plastics material (3b) at least with its needle tip (23), two fluids are conveyed in separate ducts (17,18) to the tip (23) of the needle (21), namely a filling material, such as air, gas or a liquid, through a hollow needle (17) arranged centrally in the injector needle (21) and a viscous material (2a) in an annular duct (18) which surrounds the hollow needle (17) and which extends at a small distance between the outer shape of the hollow needle (17) and inner shape of the injector needle (21), wherein initially a drop (19) is formed from the viscous plastics material (2a) at the tip (23) of the injector needle (21) and then this drop (19) is inflated or filled with fluid via the hollow needle (17), projecting at its mouth (at 23) axially over the mouth of the annular duct (18) and extending into the drop (19), wherein an outer skin (2a) for a functional cavity is formed from the viscous plastics material (2a) of the drop (19).

2. A method according to Claim 1, **characterised in that** the material of the outer skin (2a) is identical to the base material (3b).

3. A method according to Claim 1, **characterised in that** the material of the outer skin (2a) is not identical to the base material (3b).

4. A method according to Claim 1, **characterised in that** the material of the outer skin (2a) is formed from a material, such as silicone, PUR, PE, latex or from preheated, thermoplastic plastics materials which cure hot or cold with and without curing agents.

5. A method of forming individual functional cavities in products consisting of plastics material, **characterised in that** a foamable plastics material is injected into a still-fluid base plastics material (3b) with an injector needle (21), which plastics material is foamed in the base material (3b) and forms self-contained functional cavities (1) containing a foam structure and having certain physical properties.

## Revendications

1. Procédé pour former des cavités fonctionnelles séparées dans des produits en matière plastique, notamment des semelles de chaussure, des éléments de siège et des pièces d'habillage en des matières expansées,
**caractérisé en ce qu'**
à l'aide d'une aiguille d'injection (21) dont la pointe de l'aiguille (23) plonge dans une matière plastique de base (3b) encore fluide, on transporte deux fluides dans des canaux séparés (17, 18) vers la pointe (23) de l'aiguille (21) à savoir, une matière de remplissage telle que de l'air, un gaz ou un liquide à travers l'aiguille creuse (17) située au centre de l'aiguille d'injection (21) ainsi qu'une matière plastique visqueuse (2a) dans un canal annulaire (18) entourant l'aiguille creuse (17) et qui passe à faible distance entre la forme extérieure de l'aiguille creuse (17) et la forme intérieure de l'aiguille d'injection (21),
- tout d'abord, on forme une goutte (19) de la matière plastique visqueuse (2a) à la pointe (23) de l'aiguille d'injection (21), puis
- on gonfle cette goutte (19) par l'aiguille creuse (17) qui dépasse par son embouchure (au point 23) axialement l'embouchure du canal annulaire (18) et pénètre dans la goutte (19) dans la matière plastique de base (3b) encore fluide, ou on remplit la goutte avec du liquide,
- la matière plastique visqueuse (2a) de la goutte (19) forme une peau (2a) pour la cavité fonctionnelle.

2. Procédé selon la revendication 1,
**caractérisé en ce que**
la matière de la peau (2a) est identique à la matière de base (3b).

3. Procédé selon la revendication 1,
**caractérisé en ce que**
la matière de la peau (2a) n'est pas identique à la matière de base (3b).

4. Procédé selon la revendication 1,
**caractérisé en ce que**
la peau (2a) est en une matière telle que du silicone, du PUR, du PE, du latex ou en une matière thermoplastique préchauffée, qui se forme avec ou sans durcisseur et durcit à chaud ou à froid.

5. Procédé pour former des cavités fonctionnelles séparées dans des produits en matière plastique,
**caractérisé en ce que**
dans une matière plastique de base encore fluide (3b), on injecte une matière plastique susceptible d'expanser à l'aide d'une aiguille d'injection (21), cette matière s'expansant dans la matière de base (3b) et formant des cavités fonctionnelles fermées, ayant une structure de mousse et des propriétés physiques déterminées (1).
